# EUROPÄISCHE PATENTSCHRIFT

(11) **EP 2 342 437 B1**
(45) Veröffentlichungstag und Bekanntmachung des Hinweises auf die Patenterteilung: **08.08.2012**
(21) Anmeldenummer: 09778584.4
(22) Anmeldetag: 17.09.2009
(51) Int. Cl.: F02B 37/04, F02D 41/00, F02B 21/00, F02B 33/44, F02D 35/00

(54) **FRISCHGASVERSORGUNGSVORRICHTUNG FÜR EINE VERBRENNUNGSMASCHINE MIT ABGASTURBOLADER UND VERFAHREN ZU DEREN STEUERUNG**
FRESH GAS SUPPLY DEVICE FOR AN INTERNAL COMBUSTION ENGINE HAVING AN EXHAUST GAS TURBOCHARGER, AND METHOD FOR THE CONTROL THEREOF
DISPOSITIF D'ALIMENTATION EN GAZ FRAIS POUR UN MOTEUR À COMBUSTION INTERNE COMPRENANT UN TURBOCOMPRESSEUR À GAZ D'ÉCHAPPEMENT ET PROCÉDÉ POUR LA COMMANDE D'UN TEL DISPOSITIF

(30) Priorität: 17.09.2008 DE 102008047802
(43) Veröffentlichungstag der Anmeldung: 13.07.2011
(60) Teilanmeldung: 11004713.1
(73) Patentinhaber: Knorr-Bremse Systeme für Nutzfahrzeuge GmbH, 80809 München (DE)
(72) Erfinder: REBHAN, Stephan, 81373 München (DE); ULRICH, Niklas, 80796 München (DE); SIPOS, András, H-1094 Budapest (HU); LELKES, Márk, H-1119 Budapest (HU); DOHANY, Tamás, H-7630 Pécs (HU); LORANT, Gabor, H-1192 Budapest (HU)
(74) Vertreter: Schönmann, Kurt
(86) Internationale Anmeldenummer: PCT/EP2009/006729
(87) Internationale Veröffentlichungsnummer: WO 2010/031560

(56) Entgegenhaltungen:
- WO-A1-2005/064134
- DE-A1-102004 047 975
- DE-A1-102006 008 785

## Beschreibung

Die Erfindung betrifft eine Frischgasversorgungsvorrichtung für eine Verbrennungsmaschine mit Abgasturbolader nach dem Oberbegriff des Anspruchs 1 und ein Verfahren zum Regeln eines Auslassdrucks einer solchen Frischgasversorgungsvorrichtung.

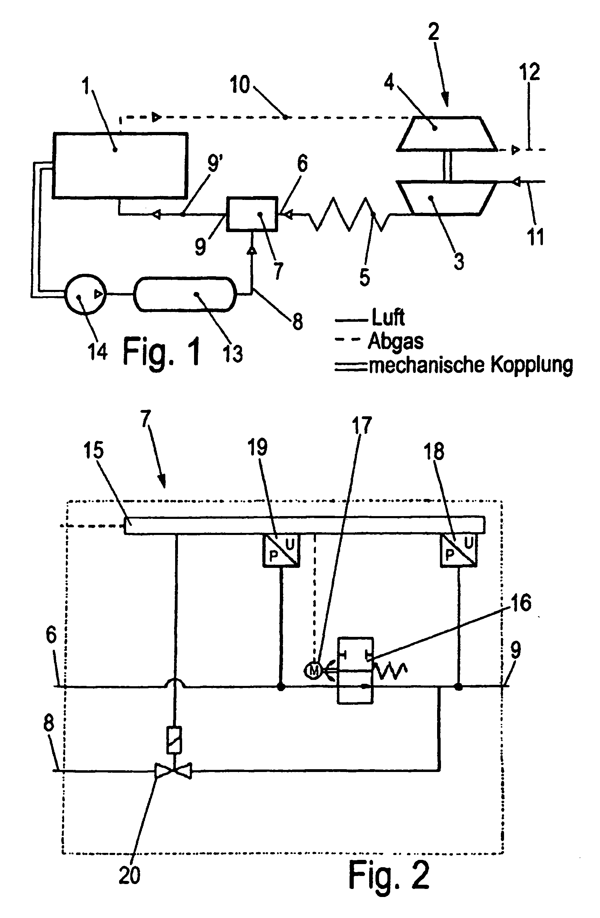

Verbrennungsmaschinen, wie zum Beispiel Dieselmotoren, sind oft mit Abgasturboladern ausgerüstet. Hierzu zeigt Fig. 1 eine schematische Darstellung einer Verbrennungsmaschine 1, deren Abgasleitung 10 mit einem Abgasturbolader 2 gekoppelt ist. Der Abgasturbolader besitzt eine von Abgas angetriebene Turbine 2, die mit einem Verdichter 3 gekoppelt ist. Der Verdichter 3 verdichtet Ansaugluft aus einem Ansauglufteinlass 11 zur Erhöhung eines Ansaugdrucks in einer Saugleitung 9' für die Verbrennungsmaschine 1, wodurch zum Beispiel ein Beschleunigungsverhalten des Fahrzeugs mit der Verbrennungsmaschine 1 und eine Reduzierung des Energieverbrauchs erreicht werden.

Der Abgasturbolader 1 kann jedoch nicht in jedem Betriebszustand der Verbrennungsmaschine 1 ausreichend Luft fördern und somit einen genügenden Ansaugdruck erzeugen. Beispielsweise weisen Kolbenmaschinen wie Dieselmotoren mit Abgasturbolader 2 zum Beispiel einen Betriebszustand beim Beschleunigen auf, der als "Turboloch" bezeichnet wird. Hierbei reagiert die Verbrennungsmaschine 1 beim Gasgeben mit einer Drehzahlerhöhung erst nach einer bestimmten Verzögerungszeit, in welcher keine Abgasenergie, d.h. auch kein genügender Abgasdruck, zum Antrieb des Abgasturboladers 2 und somit keine komprimierte Ansaugluft mit entsprechendem Ansaugdruck zur Verfügung steht. Zur Überbrückung dieses "Turbolochs" sind Lösungsvorschläge gemacht worden, wobei Druckluft, zum Beispiel aus einem von einem Luftverdichter 14 gespeisten Behälter 13, gesteuert in die Saugleitung 9' der Verbrennungsmaschine eingeleitet 1 wird, um bei erhöhtem Ansaugluftbedarf der Verbrennungsmaschine 1 diesen zu decken. Dieses erfolgt mittels einer Frischgasversorgungsvorrichtung 7, welche zwischen dem Verdichter 3 des Turboladers bzw. einem in Strömungsrichtung nachgeschalteten Ladeluftkühler 5 und der Saugleitung 9' angeordnet ist.

Eine solche Frischgasversorgungsvorrichtung 7 ist in Fig. 2 schematisch dargestellt. Die Frischgasversorgungsvorrichtung 7 ist mit einem Ladelufteinlass 6 mit dem Ladeluftkühler 5 und mit einem Auslass 9 mit der Saugleitung 9' verbunden. Zwischen dem Ladelufteinlass 6 und dem Auslass 9 befindet sich ein Klappenelement 16, das von einem Verstellmotor 17 zum Verschluss und zur Öffnung der Verbindung von Ladelufteinlass 6 zum Auslass 9 verstellbar ist. Weiterhin ist ein Drucklufteinlass 8 mit dem Auslass 9 und über eine Mengenregeleinrichtung 20 mit dem Behälter 13 verbunden. Eine Steuereinrichtung 15 dient zur Steuerung der Mengenregeleinrichtung 20 und des Verstellmotors 17. Sie ist hier auch mit Drucksensoren 18 und 19 verbunden, von denen ein erster Drucksensor 18 einen Druck des Auslasses 9 (Auslassdruck) und ein zweiter Drucksensor 19 einen Druck des Ladelufteinlasses (Einlassdruck) abtastet und eine Drehmomentanforderung bei einem "Kick-Down" feststellt. In diesem Fall führt die Mengenregeleinrichtung 20 Druckluft durch Öffnung der Verbindung vom Drucklufteinlass 8 zum Auslass 9 zu. Zuvor wird das gesteuerte Klappenelement 16 geschlossen, so dass die Druckluft nicht über den Ladelufteinlass 6 in den Verdichter 3 des Abgasturboladers 2 entgegen der Ansaugrichtung, sondern über den Auslass 9 gerichtet in die Saugleitung 9' strömt. Bei Beenden der Druckluftzufuhr wird dieses Klappenelement 16 wieder geöffnet und die Mengenregeleinrichtung 20 geschlossen. Zu diesem Zeitpunkt ist der Einlassdruck durch den Verdichter 3 des Abgasturboladers 2 wieder ausreichend.

Die Offenlegungsschrift DE 10 2006 785 A1 beschreibt dazu ein Beispiel zur Illustration.

Der Auslassdruck ist durch die Zufuhr von Druckluft so eingestellt, dass keine Rauchbildung aufgrund eines zu angereicherten Kraftstoffluftgemisches erfolgen kann. Dadurch kann ein magereres Kraftstoffluftgemisch als erforderlich erzeugt werden, insbesondere zu Beginn der Druckluftzufuhr. Folglich wird mehr Luft verbraucht als nötig. Das kann zu erhöhter Leistung des Luftverdichters 14 und zusätzlicher NOx-Bildung fahrern.

Es ist daher die Aufgabe der vorliegenden Erfindung, eine verbesserte Frischgasversorgungsvorrichtung mit einem Proportionalventil und ein Verfahren zum Regeln eines Auslassdrucks einer solchen Frischgasversorgungsvorrichtung bereitzustellen, wobei die obigen Nachteile behoben beziehungsweise bedeutend verringert und weitere Vorteile geschaffen sind.

Die Aufgabe wird durch eine Frischgasversorgungsvorrichtung mit den Merkmalen des Anspruchs 1 gelöst. Die Aufgabe wird ferner durch ein Verfahren mit den Merkmalen des Anspruchs 11 gelöst.

Durch das zumindest eine Ventil und das nachgeschaltete Proportionalventil ist es vorteilhaft möglich, die Druckluftzufuhr anfänglich schnell zu ermöglichen, wobei dann das Proportionalventil für eine Regelung des Auslassdrucks durch Verstellen verwendet wird. Dabei erfolgt kein Drucküberschuss, und das Kraftstoffluftgemisch kann vorteilhaft auf den zu einem jeweiligen Betriebszustand erforderlichen Wert eingestellt werden. Das zumindest eine Ventil ist zur Abdichtung eines höheren Drucks als das Proportionalventil ausgelegt, wodurch das Proportionalventil kleiner ausfallen kann.

In einer bevorzugten Ausführung ist vorgesehen, dass das zumindest eine Ventil und das Proportionalventil in einem Ventilgehäuse eines Ventilmoduls angeordnet sind. Auch im Falle der Mehrstufigkeit mit zumindest zwei Ventilen ist eine solche Modulanordnung vorteilhaft, da sie die Möglichkeit zum einfachen Austausch und zur Anpassung an unterschiedliche Einsatzfälle bietet.

In einer weiteren bevorzugten Ausführung weist das Proportionalventil eine Ventilscheibe auf, welche in einem Strömungspfad zwischen dem zumindest einen Ventil und einer Auslassöffnung zum Auslass angeordnet und zur Bildung der geschlossenen Stellung und beliebig geöffneten Stellungen zum Verschluss bzw. zur Öffnung des Strömungspfades von einem Schrittmotor verschwenkbar ist. Es kann außerdem eine Sicherheitsfeder aufweisen, welche mit der Ventilscheibe verbunden ist und eine Kraft auf diese in Richtung geschlossener Stellung der Ventilscheibe ausübt. Durch das vorgeschaltete Ventil kann ein Proportionalventil, welches hier nur eingeschränkte Dichtmöglichkeit für geringere Drücke als das vorgeschaltete Ventil aufweist, in erster Linie zur Druckeinstellung bei einer Regelung des Auslassdrucks verwendet werden, wodurch Bauraum eingespart wird. Bei einem Ausfall des Schrittmotors stellt die Sicherheitsfeder die Ventilscheibe in die geschlossene Stellung zurück.

Das zumindest eine Ventil kann ein Membranventil sein, welches sich für den Einbauzweck in einem Ventilmodul gut eignet.

Die Frischgasversorgungsvorrichtung kann zumindest einen Drucksensor zur Abtastung des Auslassdrucks und zumindest einen Drucksensor zur Abtastung eines Einlassdrucks im Ladelufteinlass aufweisen, wodurch der jeweilige Druckwert vor Ort messbar und nicht aus anderen Betriebsparametern ableitbar ist. Die Drucksensoren können - müssen aber nicht - nach einer vorteilhaften Variante direkt in die Frischgasversorgungseinrichtung integriert sein. In einer alternativen Ausführung sind geeignete Messeinrichtungen außerhalb der Frischgasversorgungsvorrichtung zur Abtastung des Einlassdrucks und Auslassdrucks angeordnet. Eine weitere alternative Ausführung sieht vor, dass der Einlassdruck und Auslassdruck anhand von Betriebsparametern mittels geeigneter Algorithmen und/oder gespeicherter Tabellenwerten berechenbar sind. Die Betriebsparameter können dabei vorhandene Werte, zum Beispiel aus einem Zentralrechner, sein. Die Algorithmen und/oder Tabellenwerte können Bestandteil einer Software eines Steuergerätes, zum Beispiel des Motorsteuergerätes, sein.

Ein Verfahren zum Regeln eines Auslassdrucks in einem Auslass einer oben beschriebenen Frischgasversorgungsvorrichtung mit zumindest einem Ventil und einem nachgeschalteten Proportionalventil weist folgende Verfahrensschritte auf:
(S1) Ermitteln eines Einlassdrucks in einem Ladelufteinlass und eines Auslassdrucks im Auslass der Frischgasversorgungsvorrichtung, sowie von Betriebsparametern eines Betriebszustands der Verbrennungsmaschine;
(S2) Unterbrechen der Verbindung des Auslasses zum Ladelufteinlass durch Schließen der Verstelleinrichtung, vorzugsweise des Klappenelementes, wenn ein ermittelter Betriebsparameter oder mehrere eine erhöhte Beschleunigung der Verbrennungsmaschine erfordern;
(S3) Öffnen der Verbindung des Auslasses zum Drucklufteinlass durch Öffnen des zumindest einen Ventils und des Proportionalventils während einer Druckaufbauphase und Regeln des Auslassdrucks durch Vergleichen des Auslassdrucks mit einem Solldruck durch Verstellen des Proportionalventils während einer Druckregelphase; und
(S4) Schließen der Verbindung des Auslasses zum Drucklufteinlass durch Schließen des zumindest einen Ventils sowie des Proportionalventils und Öffnen der Verbindung des Auslasses zum Ladelufteinlass durch Öffnen der Verstelleinrichtung, vorzugsweise des Klappenelementes, wenn der Einlassdruck einen definierten und parametrierbaren Wert erreicht hat. Dieser Wert kann zum Beispiel dem Auslassdruck entsprechen, oder vorher festlegbar sein.

Dabei kann der Solldruck aus den ermittelten Betriebsparametern und Drücken durch die Steuereinrichtung anhand von geeigneten Algorithmen und/oder gespeicherten Tabellenwerten ermittelt werden. Dies kann in der Steuereinrichtung oder auch teilweise in einer übergeordneten Motorsteuerung erfolgen. Auch das Verstellen des Proportionalventils kann gemäß einer Look-Up-Tabelle durch die Steuereinrichtung vorgenommen werden. Dadurch wird sichergestellt, dass bei jedem Betriebszustand der Verbrennungsmaschine bei Druckluftzufuhr das jeweils notwendig Kraftstoffluftgemisch korrekt eingestellt wird, wodurch keine erhöhte NOx-Bildung erfolgt. Außerdem wird durch Lufteinsparung die Leistung des Luftverdichters nicht erhöht und somit Kraftstoff eingespart, da der Luftverdichter entweder direkt mit der Verbrennungsmaschine verbunden ist oder indirekt durch von ihr erzeugten Strom aus einem Generator oder einer Batterie betrieben wird.

Anstelle eines Klappenelementes kann auch eine andere Art von Verstelleinrichtung, so z.B. ein Schieberelement eingesetzt werden.

Die Erfindung wird nun anhand von Ausführungsbeispielen mit Bezug auf die beigefügten Zeichnungen näher erläutert. Hierbei zeigt:
- Fig. 1: eine schematische Darstellung einer Verbrennungsmaschine mit einem Abgasturbolader und einer Frischgasversorgungsvorrichtung;
- Fig. 2: ein schematisches Blockschaltbild einer herkömmlichen Frischgasversorgungsvorrichtung;
- Fig. 3: ein schematisches Blockschaltbild eines ersten Ausführungsbeispiels einer erfindungsgemäßen Frischgasversorgungsvorrichtung;
- Fig. 4: eine grafische Darstellung eines Auslassdrucks;
- Fig. 5: eine perspektivische Illustration in Explosionsdarstellung eines Ventilmoduls nach dem ersten Ausführungsbeispiel der Fig. 3;
- Fig. 6: eine grafische Darstellung eines Strömungsquerschnitts eines Proportionalventils in Abhängigkeit von einer Winkelstellung einer Ventilscheibe;
- Fig. 7: eine schematische Querschnittsdarstellung des Ventilmoduls längs Linie Z-Z nach Fig. 5;
- Fig. 8: ein schematisches Blockschaltbild eines zweiten Ausführungsbeispiels der erfindungsgemäßen Frischgasversorgungsvorrichtung; und
- Fig. 9: eine grafische Darstellung eines Auslassdrucks und dazugehöriger Strömungsquerschnitte eingeschalteter Ventile.

Gleiche Bauelemente bzw. Funktionseinheiten mit gleicher Funktion sind mit gleichen Bezugszeichen in den Figuren gekennzeichnet.

Fig. 1 und Fig. 2 sind bereits eingangs beschrieben worden und werden hier nicht weiter erläutert.

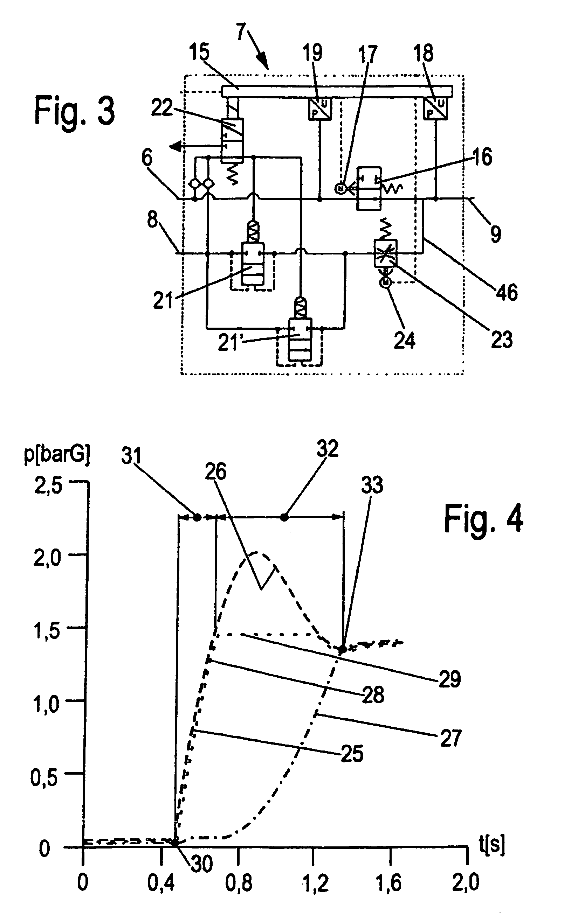

In Fig. 3 ist ein schematisches Blockschaltbild eines ersten Ausführungsbeispiels einer erfindungsgemäßen Frischgasversorgungsvorrichtung 7 illustriert, wobei im Gegensatz zu der herkömmlichen Frischgasversorgungsvorrichtung 7 nach Fig. 2 die Mengenregelvorrichtung 20 hier zwei Ventile 21, 21' mit einem zugehörigen Steuerventil 22 und einem in Strömungsrichtung nachgeschalteten Proportionalventil 23, das von einem Schrittmotor 24 verstellbar ist, umfasst. Hierbei sind die zwei Ventile 21, 21' parallel geschaltet. Die Ventile 21, 21' sind vorzugsweise als Versorgungsventile ausgebildet und werden durch das Steuerventil 22, welches von der Steuereinrichtung 15 elektrisch steuerbar ist, gemeinsam ein- und ausgeschaltet. Bei nicht erforderlicher Druckluftzufuhr aus dem Drucklufteinlass 8 verschließen sie ihn, wobei das Proportionalventil 23 in diesem Zustand nicht mit dem Druck des Druckeinlasses 8 beaufschlagt ist und entsprechend ausgebildet sein kann. Es wird weiter unten noch näher erläutert.

Zur Funktion wird nun auf Fig. 4 Bezug genommen. Fig. 4 ist eine grafische Darstellung eines ersten Auslassdrucks 25 im Auslass 9 der Frischgasversorgungsvorrichtung 7, aufgetragen über einer Achse mit der Zeit t. Bei einer Drehmomentanforderung, die durch Überwachung von Druckwerten des Ladelufteinlasses 6 (Einlassdruck 27) und des Auslassdrucks 25 im Auslass 9 durch die an der Frischgasversorgungsvorrichtung 7 oder außerhalb von ihr angeordneten Drucksensoren 18, 19 oder auch durch andere, nicht gezeigte Messeinrichtungen über die Steuereinrichtung 15 ermittelt wird, steuert diese zunächst den Verstellmotor 17 des Klappenelementes 16 zum Verschluss der Verbindung vom Ladelufteinlass 6 zum Auslass 9 an. Dabei wird das Proportionalventil 23 über den Schrittmotor 14 geöffnet. Dann wird das Steuerventil 22 eingeschaltet, wodurch die Ventile 21, 21' öffnen und so über das geöffnete Proportionalventil 23 den Drucklufteinlass 6 mit dem Auslass 9 verbinden. Eine Rückwirkung der nun in diesen einströmenden Druckluft auf den Ladelufteinlass 6 wird durch das geschlossene Klappenelement 16 verhindert. Dabei steigt der Auslassdruck 25 im Auslass 9 ausgehend von einem Einblasbeginn 31 während einer Druckaufbauphase 31 schnell auf einen Überdruck 26 (hier: ca. 2 bar) an, der durch den ersten Drucksensor 18 an die Steuereinrichtung 15 geliefert und mit einem vorher einstellbaren Solldruck 29 (in diesem Beispiel ca. 1,5 bar) verglichen wird. Dadurch wird über die Steuereinrichtung 15 das Proportionalventil 23 auf einen kleineren Strömungsquerschnitt verstellt, so dass in einer sich anschließenden Druckregelphase 32 mittels dieser Regelschleife der Auslassdruck 25 auf einen Solldruck 29 eingeregelt wird. Ohne diese Regelung würde der Auslassdruck 25 den Überdruck 26 vollständig einnehmen und wieder abfallen, wodurch eine Abmagerung des Kraftstoffluftgemisches und eine erhöhte Förderleistung des Luftverdichters 14 resultieren würden.

Zu Beginn der Drehmomentanforderung ist der vom Abgasturbolader 2 gelieferte Ladeluftdruck, welcher als Einlassdruck 27 in diesem Beispiel vom zweiten Drucksensor 19 abgetastet wird, noch sehr gering ("Turboloch"). Er steigt dann parabelförmig an, da der Abgasturbolader 2 beschleunigt und mehr Ladeluft erzeugt.

Die Druckregelphase 32, in welcher der Auslassdruck 25 auf den Solldruck 29 geregelt wird, der quasi einen konstanten Wert bildet, verläuft bis zum Einblasende 33, wenn der Einlassdruck 27 und der Auslassdruck 25 im Wesentlichen übereinstimmen. Oder wenn der Einlassdruck 27 einen definierten und parametrierbaren Wert erreicht hat. Dieser Wert kann zum Beispiel dem Auslassdruck entsprechen, oder vorher festlegbar sein.

Mit dem Bezugszeichen 28 ist ein Verlauf eines Sollanstiegs des Auslassdrucks 25 bezeichnet.

Bei Einblasende 33 werden die Ventile 21, 21' geschlossen, ebenfalls das Proportionalventil 23, wobei das Klappenelement 16 wieder geöffnet wird.

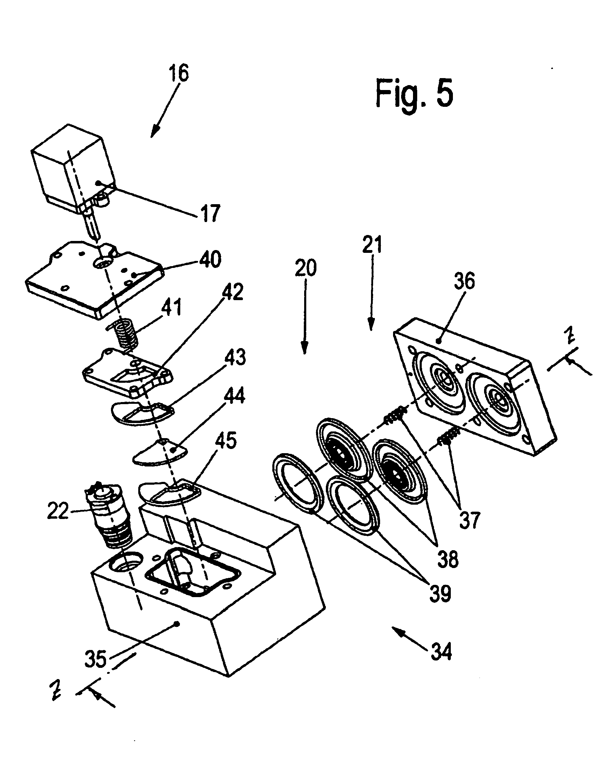

Die Ventile 21, 21', das Proportionalventil 23 mit Schrittmotor 24 und das Steuerventil 22 sind in bevorzugter Ausführung in einem Ventilmodul 34, das in Fig. 5 in einer perspektivischen Explosionsdarstellung illustriert ist, angeordnet. Das Ventilmodul 34 besitzt ein Ventilgehäuse 35 zur Aufnahme des Steuerventils 22, des Proportionalventils 23 und der Ventile 21, 21'. Die Ventile 21, 21' sind in diesem Fall als flache Membranventile mit Diaphragmen 38, Stützringen 39 und Diaphragmenfedern 37 ausgeführt, welche in dem Ventilgehäuse 35 angeordnet und durch einen Membrandeckel 36 verschlossen sind. Es können natürlich auch andere Ausgestaltungen benutzt werden.

Das Proportionalventil 23 weist einen variablen Strömungsquerschnitt auf. Der Strömungsquerschnitt (Ventilscheibenposition) wird dynamisch in Funktion des Luftbedarfs der Verbrennungsmaschine 1 (mit dem Ziel eines konstanten Kraftstoffluftgemisches) eingestellt. Das Proportionalventil 23 wird von dem Schrittmotor 24 verstellt, indem dieser eine mit seiner Welle verbundene Ventilscheibe 44 direkt verschwenkt. Wenn das Einblasende 33 erreicht ist, wird das Proportionalventil 23 vollständig geschlossen, wobei das Ventilmodul 34 damit von der Saugleitung 9', d.h. vom Auslass 9 getrennt ist. Die hauptsächliche Dichtfunktion des Proportionalventils 23 besteht darin zu verhindern, dass Inhalte der Saugleitung 9' in das Ventilmodul 34 eindringen. Weiterhin ist eine Sicherheitsfeder 41 mit der Welle des Schrittmotors 23 bzw. mit der Ventilscheibe 44 gekoppelt, wodurch die Ventilscheibe 44, zum Beispiel bei einem Stromausfall, in die geschlossene Stellung zurückgeschwenkt wird. Die Ventilscheibe 44 ist zwischen einer oberen Dichtung 43 und einer unteren Dichtung 45 verschwenkbar angeordnet, wobei die obere Dichtung 43 von einer Dichtungsstützplatte 42 mit einer Öffnung gehalten ist. Die Dichtungen 43, 45 und die Dichtungsstützplatte 42 befinden sich mit der Ventilscheibe 44 in diesem Beispiel innerhalb einer korrespondierenden Ausnehmung des Ventilgehäuses 35, welche mit einem Ventildeckel 40 verschlossen ist. Der Schrittmotor 24 ist auf dem Ventildeckel 40 von außen angebracht, wobei sich die Motorwelle durch den Ventildeckel 40 hindurch in die Ausnehmung erstreckt. Zur Erzielung guten Trag-, Gleit- und Dichteigenschaften sind die Dichtungen 43, 45 zum Beispiel mit PTFE beschichtet.

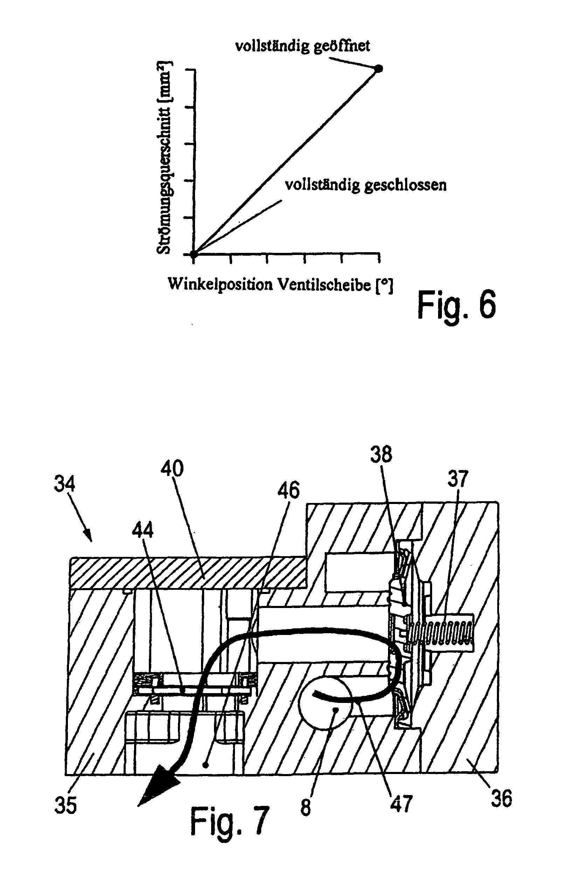

Fig. 6 zeigt eine grafische Darstellung eines Strömungsquerschnitts des Proportionalventils 23 in Abhängigkeit von einer Winkelstellung der Ventilscheibe 44. Die Verstellung des Proportionalventils 23 und somit des Strömungsquerschnitts ist aus einer geschlossenen Stellung stufenlos zu einer geöffneten Stellung und zurück proportional zum Verstellwinkel der Ventilscheibe 44. Andere Zusammenhänge sind ebenfalls möglich.

Das Steuerventil 22 ist mit seiner Längsachse parallel neben dem Proportionalventil 23 in dem Ventilgehäuse 35 angeordnet, wobei die Ventile 21, 21' mit ihren Längachse im Wesentlichen rechtwinklig von einer Seite in das Ventilgehäuse 35 eingebracht sind. Andere Anordnungen sind möglich. Die Ventile 22 und 21, 21' und 23 sind durch Kanäle innerhalb des Ventilgehäuses 35 miteinander entsprechend verbunden. Die Unterseite des Ventilgehäuses 35 (siehe Fig. 7) in dieser Darstellung ist an die Frischgasversorgungseinrichtung 7 anbringbar.

Hierzu illustriert Fig. 7 eine schematische Querschnittsdarstellung des Ventilmoduls 34 längs Linie Z-Z nach Fig. 5. Ein Strömungspfad 47 der Druckluft verläuft vom Drucklufteinlass 8 durch die geöffneten Diaphragmen 38 der Ventile 21, 21' durch einen Verbindungskanal durch die geöffnete Ventilscheibe 44 des Proportionalventils 23 in eine Auslassverbindung 46, die in nicht dargestellter Weise mit dem Auslass 9 der Frischgasversorgungsvorrichtung 7 kommuniziert. Die Diaphragmenfedern 37 üben eine Kraft auf die Diaphragmen 38 derart aus, dass diese bei Nichtbetätigung den Durchgang vom Drucklufteinlass 8 zum Proportionalventil 23 verschließen.

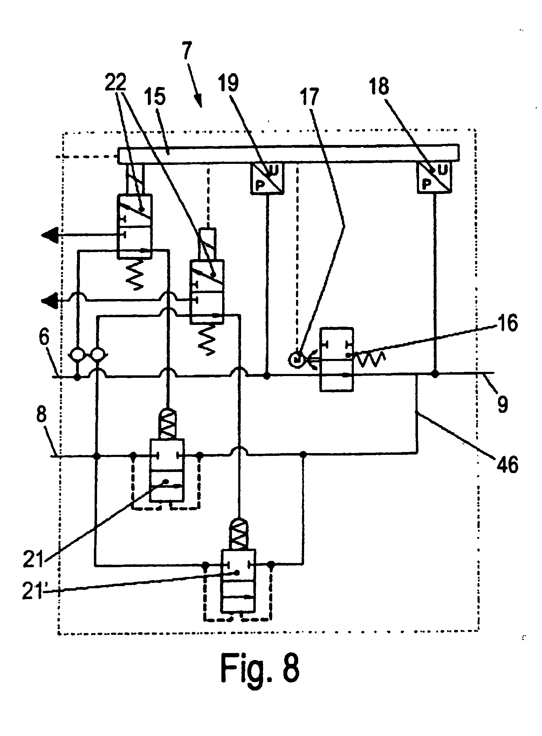

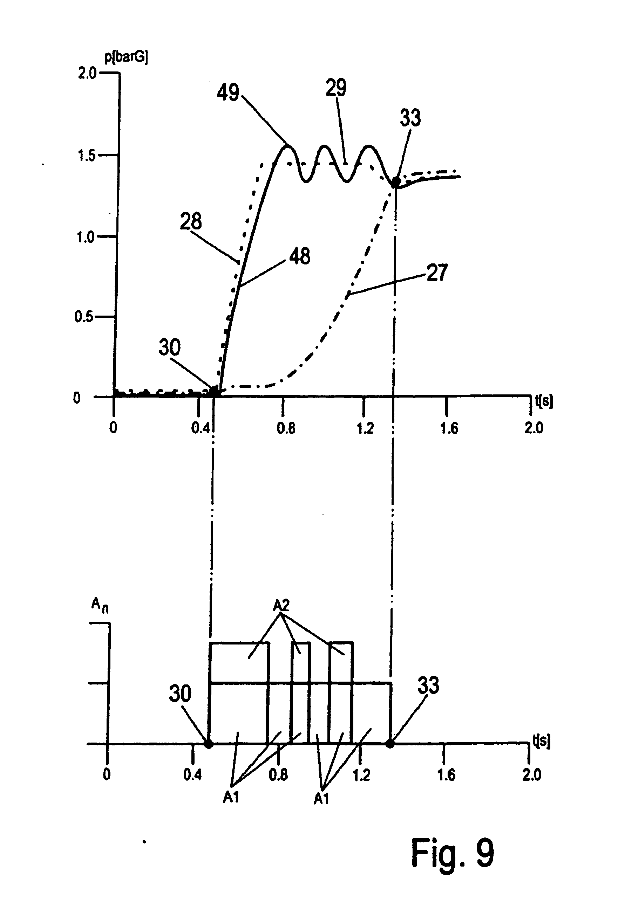

Fig. 8 zeigt ein schematisches Blockschaltbild eines zweiten Ausführungsbeispiels der erfindungsgemäßen Frischgasversorgungsvorrichtung 7. Die bereits in Fig. 3 beschriebenen und hier vorhandenen Funktionselemente werden hier nicht erneut beschrieben. Hierbei sind zumindest zwei Ventile 21, 21', vorzugsweise zwei Hochdruckventile, parallel zueinander zwischen dem Drucklufteinlass 8 und dem Auslass 9 angeordnet. Sie sind jeweils von einem Steuerventil 22 durch die Steuereinrichtung 15 separat voneinander steuerbar. In der hier gezeigten zweiten Ausführung besitzen die Ventile 21, 21' unterschiedliche Strömungsquerschnitte Aₙ, nämlich A1 und A2, wie Fig. 9 unten schematisch zeigt.

Fig. 9 zeigt eine grafische Darstellung eines zweiten Auslassdrucks 48 und dazugehöriger Strömungsquerschnitte Aₙ eingeschalteter Ventile 21, 21'. Im oberen Teil der Fig. 9 ist ein zweiter Auslassdruck 48 im Auslass 9 über der Zeit t aufgetragen, wobei im unteren Teil der Fig. 9 zugehörige Strömungsquerschnitte Aₙ eingeschalteter Ventile 21, 22 illustriert sind. Der Einlassdruck 27 ist bereits unter Fig. 4 erläutert worden. Das Bezugszeichen 28 gibt den Sollanstieg eines idealen Druckanstiegs im Auslass 9 an. Der Solldruck 29 ist der Sollwert (hier im Bereich von 1,5 bar), welcher als Vergleichswert zu einem Istwert des zweiten Auslassdrucks 48 (gemessen im Auslass 9) zur Ermittlung einer Stellgröße für den Strömungsquerschnitt A der Ventile 21, 21' verwendet wird, um somit den zweiten Auslassdruck 48 auf den Sollwert 29 einzuregeln. Dabei können im Verlauf der Druckregelphase 33 (siehe auch Fig. 4) nach erfolgtem Druckanstieg Druckschwingungen 49 um den Sollwert 29 auftreten. Ein Überdruck 26 wie in Fig. 4 dargestellt und die damit verbundenen Nachteile können jedoch vermieden werden.

Zur Erzielung des gewünschten Strömungsquerschnitts werden die zumindest zwei Ventile 21, 21' separat von einander einzeln oder gleichzeitig ein- bzw. ausgeschaltet. Die zumindest zwei Ventile 21, 21' weisen hier unterschiedliche Strömungsquerschnitte A1, A2 auf, wobei A1 größer A2 ist. Bei Einblasbeginn 30 sind beide Strömungsquerschnitte A1, A2 geöffnet, dann wird A2 intermittierend geschlossen, wodurch sich die Druckschwingung 49, die hier übertrieben dargestellt ist, ergibt. Beide Strömungsquerschnitte A1, A2 werden dann beim Einblasende 33 geschlossen. Die Strömungsquerschnitte A1, A2 können auch gleich groß sein. Auch die Einschalt- bzw. Ausschaltzeiten können variiert werden. Bei einer größeren Anzahl von Ventilen 21, 21' mit mehreren unterschiedlichen Strömungsquerschnitten Aₙ, unterschiedlichen Ein- und Ausschaltzeiten sind größere Variationsmöglichkeiten und feinere Regelungsabstufungen sowie geringere Druckschwingungen 49 des zweiten Auslassdrucks 48 möglich.

Der gesamte Strömungsquerschnitt wird festgelegt, um den maximalen Luftverbrauch der Verbrennungsmaschine, normalerweise die Waste-Gate-Betätigung, zu unterstützen.

Die Anordnung der zumindest zwei Ventile 21, 21' mit zugehörigen Steuerventilen 22 in diesem zweiten Ausführungsbeispiel kann ebenfalls in einem Ventilmodul 34 ähnlich dem ersten Ausführungsbeispiel erfolgen.

Die Ein-/Ausschaltfolge dieser mehrstufigen Ventile 21, 21' erfolgt mittels einer bestimmten Strategie, bei welcher unterschiedliche Auslassdruckcharakterisika in große Variation möglich sind. Derartige Strategien können zum Beispiel aus einer Steuer- bzw. Regelstrategie abgeleitet werden, die alle elektrischen/mechanischen, im System eines zu der Verbrennungsmaschine 1 gehörenden Fahrzeugs verfügbaren Signale/Parameter/Programme benutzt. Hierbei können Look-Up-Tabellen und weiterer gespeicherte Werte/Tabellen u. dgl. zur Anwendung kommen. Derartige Tabellen können bei Einstell- bzw. Hochlaufphasen der Verbrennungsmaschine 1 bzw. deren Steuerung usw. erstellt, abgeglichen, geändert, ergänzt werden.

Die Erfindung ist nicht auf die oben beschriebenen Ausführungsbeispiele beschränkt. Sie ist im Rahmen der beigefügten Ansprüche modifizierbar.

Im ersten Ausführungsbeispiel ist es auch möglich, nur ein Ventil 21 oder mehrere zu verwenden.

So kann zum Beispiel zumindest eines der zumindest zwei Ventile 21,21' vorzugsweise Versorgungsventile des zweiten Ausführungsbeispiels nach Fig. 8 mittels einer mechanischen, elektrischen oder anderen oder Kombination dieser zwischen einer geschlossenen Stellung und einer geöffneten Stellung, vollständig variabel oder auch stufig verstellbar sein, derart, dass ein Strömungsquerschnitt ebenfalls vollständig variabel oder auch stufig verstellbar ist, wodurch eine noch vielseitigere Regelung und Anpassung des Auslassdrucks 48 möglich ist.

Es ist auch denkbar, dass ein Ventil 21, 21' mehrstufig mit gleich großen oder unterschiedlichen Strömungsquerschnitten ausgebildet ist.

Es ist ferner möglich, dass der Einlassdruck 27 und der Auslassdruck 25, 48 oder nur einer von diesen beiden rechnerisch anhand von Betriebsparametern ermittelbar ist. Zum Beispiel können die Betriebsparameter mittels eines geeigneten Algorithmus und/oder gespeicherter Tabellenwert durch die Steuereinrichtung 15 errechnet werden.

Außerdem ist es möglich, dass auch das Klappenelement 16 mittels elektrischer, mechanischer und/oder anderer Mittel zwischen einer geschlossenen Stellung und einer geöffneten Stellung stufenlos einstellbar ist. Hierbei sind mehrere Fälle möglich, nämlich, dass entweder die zwei Ventile 21, 21' und das Klappenelement 16 oder nur das Klappenelement 16 oder nur die zwei Ventile 21, 21' stufenlos einstellbar sind. In dem Fall einer stufenlosen Einstellbarkeit sowohl der zwei Ventile 21, 21' als auch des Klappenelementes 16 ist eine sehr große Variationsmöglichkeit und Anpassungsfähigkeit an ein weites Spektrum von Betriebszuständen möglich.

### Bezugszeichenliste

- 1: Verbrennungsmaschine
- 2: Abgasturbolader
- 3: Verdichter
- 4: Abgasturbine
- 5: Ladeluftkühler
- 6: Ladelufteinlass
- 7: Frischgasversorgungsvorrichtung
- 8: Drucklufteinlass
- 9: Auslass
- 9': Saugleitung
- 10: Abgasleitung
- 11: Ansauglufteinlass
- 12: Abgasauslass
- 13: Behälter
- 14: Luftverdichter
- 15: Steuereinrichtung
- 16: Klappenelement
- 17: Verstellmotor
- 18: Erster Drucksensor
- 19: Zweiter Drucksensor
- 20: Mengenregeleinrichtung
- 21, 21': Ventil
- 22: Steuerventil
- 23: Proportionalventil
- 24: Schrittmotor
- 25: Erster Auslassdruck
- 26: Überdruck
- 27: Einlassdruck
- 28: Sollanstieg
- 29: Solldruck
- 30: Einblasbeginn
- 31: Druckaufbauphase
- 32: Druckregelphase
- 33: Einblasende
- 34: Ventilmodul
- 35: Ventilgehäuse
- 36: Membrandeckel
- 37: Membranfeder
- 38: Membran
- 39: Stützring
- 40: Ventildeckel
- 41: Sicherheitsfeder
- 42: Dichtungsstützplatte
- 43: Obere Dichtung
- 44: Ventilscheibe
- 45: Untere Dichtung
- 46: Auslassverbindung
- 47: Strömungspfad
- 48: Zweiter Auslassdruck
- 49: Druckschwingung
- Aₙ: Strömungsquerschnitt
- p: Druck
- t: Zeit

## Patentansprüche

1. Frischgasversorgungsvorrichtung (7) für eine Verbrennungsmaschine (1) mit Abgasturbolader (2), aufweisend:
a) einen Ladelufteinlass (6) zum Einlass von Ladeluft aus dem Abgasturbolader (2);
b) einen Drucklufteinlass (8) zum Einlass von Druckluft;
c) einen Auslass (9), der über eine Verstelleinrichtung, vorzugsweise über ein Klappenelement (16) mit dem Ladelufteinlass (6) und über eine Mengenregeleinrichtung (20), welche eine geschlossene Stellung und vorzugsweise beliebig geöffnete Stellungen aufweist, mit dem Drucklufteinlass (8) verbindbar ist, wobei die Mengenregeleinrichtung (20) geschlossen ist, wenn die Verstelleinrichtung teilweise geöffnet oder voll geöffnet ist; und
d) eine Steuereinrichtung (15) zur Steuerung der Verstelleinrichtung, vorzugsweise des Klappenelementes (16), und der Mengenregeleinrichtung (20) in Abhängigkeit von Betriebszuständen der Verbrennungsmaschine (1),
**dadurch gekennzeichnet, dass**
e) die Mengenregeleinrichtung (20) zumindest ein Ventil (21, 21') zur Öffnung und zum Verschluss des Drucklufteinlasses (8) und ein in Strömungsrichtung nachgeschaltetes Proportionalventil (23) zur Einstellung eines Auslassdrucks (25, 48) im Auslass (9) aufweist.

2. Frischgasversorgungsvorrichtung (7) nach Anspruch 1, **dadurch gekennzeichnet, dass** das zumindest eine Ventil (21, 21') und das Proportionalventil (23) in einem Ventilgehäuse (35) eines Ventilmoduls (34) angeordnet sind.

3. Frischgasversorgungsvorrichtung (7) nach Anspruch 1 oder 2, **dadurch gekennzeichnet, dass** das zumindest eine Ventil (21, 21') über ein Steuerventil (22) von der Steuereinrichtung (15) steuerbar ist.

4. Frischgasversorgungsvorrichtung (7) nach Anspruch 3, **dadurch gekennzeichnet, dass** das Steuerventil (22) in dem Ventilgehäuse (35) des Ventilmoduls (34) angeordnet ist.

5. Frischgasversorgungsvorrichtung (7) nach Anspruch 4, **dadurch gekennzeichnet, dass** das Proportionalventil (23) eine Ventilscheibe (44) aufweist, welche in einem Strömungspfad (47) zwischen dem zumindest einen Ventil (21, 21') und einer Auslassöffnung (46) zum Auslass (9) angeordnet und zur Bildung der geschlossenen Stellung und beliebig geöffneten Stellungen zum Verschluss bzw. zur Öffnung des Strömungspfades (47) von einem Schrittmotor (23) verschwenkbar ist.

6. Frischgasversorgungsvorrichtung (7) nach Anspruch 5, **dadurch gekennzeichnet, dass** das Proportionalventil (23) eine Sicherheitsfeder (41) aufweist, welche mit der Ventilscheibe (44) verbunden ist und eine Kraft auf diese in Richtung geschlossener Stellung der Ventilscheibe (44) ausübt.

7. Frischgasversorgungsvorrichtung (7) nach einem der vorhergehenden Ansprüche, **dadurch gekennzeichnet, dass** das zumindest eine Ventil (21, 21') ein Membranventil ist.

8. Frischgasversorgungsvorrichtung (7) nach einem der vorhergehenden Ansprüche, **dadurch gekennzeichnet, dass** die Frischgasversorgungsvorrichtung (7) zumindest einen Drucksensor (18) zur Abtastung des Auslassdrucks (25, 48) und zumindest einen Drucksensor (19) zur Abtastung eines Einlassdrucks (27) im Ladelufteinlass (6) aufweist.

9. Frischgasversorgungsvorrichtung (7) nach einem der Ansprüche 1 bis 7, **dadurch gekennzeichnet, dass** ein Auslassdruck (25, 48) und ein Einlassdruck (27) im Ladelufteinlass (6) mittels außerhalb der Frischgasversorgungsvorrichtung angeordneten Messeinrichtungen abtastbar sind.

10. Frischgasversorgungsvorrichtung (7) nach einem der Ansprüche 1 bis 7, **dadurch gekennzeichnet, dass** ein Auslassdruck (25, 48) und ein Einlassdruck (27) im Ladelufteinlass (6) anhand von Betriebsparametern mittels geeigneter Algorithmen und/oder gespeicherter Tabellenwerten berechenbar sind.

11. Verfahren zum Regeln eines Auslassdrucks (25, 48) in einem Auslass (9) einer Frischgasversorgungsvorrichtung (7) nach einem der vorhergehenden Ansprüche, wobei das Verfahren folgende Verfahrensschritte aufweist:
(S1) Ermitteln eines Einlassdrucks (27) in einem Ladelufteinlass (6) und eines Auslassdrucks (25, 48) im Auslass (9) der Frischgasversorgungsvorrichtung, sowie von Betriebsparametern eines Betriebszustands der Verbrennungsmaschine (1);
(S2) Unterbrechen der Verbindung des Auslasses (9) zum Ladelufteinlass (6) durch Schließen der Verstelleinrichtung, vorzugsweise des Klappenelementes (16), wenn ein ermittelter Betriebsparameter oder mehrere eine erhöhte Beschleunigung der Verbrennungsmaschine (1) erfordern;
(S3) Öffnen der Verbindung des Auslasses (9) zum Drucklufteinlass (8) durch Öffnen des zumindest einen Ventils (21, 21') und des Proportionalventils (23) während einer Druckaufbauphase (31) und Regeln des Auslassdrucks (25, 48) durch Vergleichen des Auslassdrucks (25, 48) mit einem Solldruck (29) durch Verstellen des Proportionalventils (23) während einer Druckregelphase (32); und
(S4) Schließen der Verbindung des Auslasses (9) zum Drucklufteinlass (8) durch Schließen des zumindest einen Ventils (21, 21') sowie des Proportionalventils (23) und Öffnen der Verbindung des Auslasses (9) zum Ladelufteinlass (6) durch Öffnen der Verstelleinrichtung, vorzugsweise des Klappenelementes (16), wenn der Einlassdruck (27) einen definierten und parametrierbaren Wert erreicht hat.

12. Verfahren nach Anspruch 11, **dadurch gekennzeichnet, dass** der Solldruck (29) aus den ermittelten Betriebsparametern und Drücken durch die Steuereinrichtung anhand von geeigneten Algorithmen und/oder gespeicherten Tabellenwerten ermittelt wird.

13. Verfahren nach Anspruch 11 oder 12, **dadurch gekennzeichnet, dass** das Verstellen des Proportionalventils (23) gemäß einer Look-Up-Tabelle durch die Steuereinrichtung (15) erfolgt.

## Claims

1. A fresh-gas supply device (7) for an internal combustion engine (1) with an exhaust turbocharger (2), having:
a) a charge-air inlet (6) for the admission of charge air from the exhaust turbocharger (2);
b) a compressed-air inlet (8) for the admission of compressed air;
c) an outlet (9) which can be connected via an adjustment means, preferably via a flap element (16), to the charge-air inlet (6) and via a volume regulation means (20), which has a closed position and preferably any desired opened positions, to the compressed-air inlet (8), the volume regulation means (20) being closed if the adjustment means is partially opened or fully opened; and
d) a control means (15) for controlling the adjustment means, preferably the flap element (16), and the volume regulation means (20) as a function of operating states of the internal combustion engine (1),
**characterised in that**
e) the volume regulation means (20) has at least one valve (21, 21') for opening and closing the compressed-air inlet (8), and a proportional valve (23) which is connected downstream in the direction of flow for setting an outlet pressure (25, 48) in the outlet (9).

2. A fresh-gas supply device (7) according to Claim 1, **characterised in that** the at least one valve (21, 21') and the proportional valve (23) are arranged in a valve housing (35) of a valve module (34).

3. A fresh-gas supply device (7) according to Claim 1 or 2, **characterised in that** the at least one valve (21, 21') can be controlled by the control means (15) via a control valve (22).

4. A fresh-gas supply device (7) according to Claim 3, **characterised in that** the control valve (22) is arranged in the valve housing (35) of the valve module (34).

5. A fresh-gas supply device (7) according to Claim 4, **characterised in that** the proportional valve (23) has a valve disc (44) which is arranged in a flow path (47) between the at least one valve (21, 21') and an outlet opening (46) to the outlet (9), and can be pivoted by a stepper motor (23) to form the closed position and any desired opened positions for closing or for opening the flow path (47).

6. A fresh-gas supply device (7) according to Claim 5, **characterised in that** the proportional valve (23) has a safety spring (41) which is connected to the valve disc (44) and exerts a force thereon in the direction of the closed position of the valve disc (44).

7. A fresh-gas supply device (7) according to one of the preceding claims, **characterised in that** the at least one valve (21, 21') is a diaphragm valve.

8. A fresh-gas supply device (7) according to one of the preceding claims, **characterised in that** the fresh-gas supply device (7) has at least one pressure sensor (18) for reading the outlet pressure (25, 48) and at least one pressure sensor (19) for reading an inlet pressure (27) in the charge-air inlet (6).

9. A fresh-gas supply device (7) according to one of Claims 1 to 7, **characterised in that** a outlet pressure (25, 48) and an inlet pressure (27) in the charge-air inlet (6) can be read by means of measuring means which are arranged outside the fresh-gas supply device.

10. A fresh-gas supply device (7) according to one of Claims 1 to 7, **characterised in that** an outlet pressure (25, 48) and an inlet pressure (27) in the charge-air inlet (6) can be calculated using operating parameters by means of suitable algorithms and/or stored tabular values.

11. A method for regulating an outlet pressure (25, 48) in an outlet (9) of a fresh-gas supply device (7) according to one of the preceding claims, the method having the following method steps:
(S1) determination of an inlet pressure (27) in a charge-air inlet (6) and of an outlet pressure (25, 48) in the outlet (9) of the fresh-gas supply device, and also of operating parameters of an operating state of the internal combustion engine (1);
(S2) interruption of the connection of the outlet (9) to the charge-air inlet (6) by closing the adjustment means, preferably the flap element (16), if a determined operating parameter or several require increased acceleration of the internal combustion engine (1);
(S3) opening of the connection of the outlet (9) to the compressed-air inlet (8) by opening the at least one valve (21, 21') and the proportional valve (23) during a pressure build-up phase (31) and regulation of the outlet pressure (25, 48) by comparing the outlet pressure (25, 48) with a desired pressure (29) by adjusting the proportional valve (23) during a pressure regulation phase (32);
and
(S4) closing of the connection of the outlet (9) to the compressed-air inlet (8) by closing the at least one valve (21, 21') and the proportional valve (23) and opening the connection of the outlet (9) to the charge-air inlet (6) by opening the adjustment means, preferably the flap element (16), if the inlet pressure (27) has reached a defined, parameterisable value.

12. A method according to Claim 11, **characterised in that** the desired pressure (29) is determined by the control means from the determined operating parameters and pressures using suitable algorithms and/or stored tabular values.

13. A method according to Claim 11 or 12, **characterised in that** the adjustment of the proportional valve (23) takes place by the control means (15) according to a look-up table.

## Revendications

1. Dispositif (7) d'alimentation en gaz frais pour un moteur (1) à combustion comprenant un turbocompresseur (2) de gaz d'échappement, comportant :
a) une entrée d'air de suralimentation pour l'entrée d'air de suralimentation à partir du turbocompresseur (2) de gaz d'échappement ;
b) une entrée (8) d'air comprimé pour l'entrée d'air comprimé ;
c) une sortie (9) qui peut communiquer, par un dispositif de réglage, de préférence par un élément (16) à volet, avec l'entrée (6) d'air de suralimentation et par un dispositif (20) de réglage de quantité, qui comporte une position fermée et des positions ouvertes, de préférence à volonté, avec l'entrée (8) d'air comprimé, le dispositif (20) de réglage de quantité étant fermé lorsque le dispositif de réglage est ouvert partiellement ou est ouvert complètement ; et
d) un dispositif (15) de commande pour la commande du dispositif de réglage, de préférence de l'élément (16) à volet, et du dispositif (20) de réglage de quantité en fonction d'états de fonctionnement du moteur (1) à combustion,
**caractérisé en ce que**
e) le dispositif (20) de réglage de quantité comporte au moins une vanne (21, 21') pour l'ouverture et pour la fermeture de l'entrée d'air comprimé et une vanne (23) proportionnelle, montée en aval dans le sens du courant, pour le réglage d'une pression (25, 48) de sortie dans la sortie (29).

2. Dispositif (7) d'alimentation en gaz frais suivant la revendication 1, **caractérisé en ce que** la au moins une vanne (21, 21') et la vanne (23) proportionnelle sont montées dans un corps (35) de vanne d'un module (34) de vanne.

3. Dispositif (7) d'alimentation en gaz frais suivant la revendication 1 ou 2, **caractérisé en ce que** la au moins une vanne (21, 21') peut être commandée par le dispositif (15) de commande par l'intermédiaire d'une vanne (22) de commande.

4. Dispositif (7) d'alimentation en gaz frais suivant la revendication 3, **caractérisé en ce que** la vanne (22) de commande est placée dans le corps (35) de vanne du module (34) de vanne.

5. Dispositif (7) d'alimentation en gaz frais suivant la revendication 4, **caractérisé en ce que** la vanne (23) proportionnelle comporte un disque (44) de vanne, qui est placé dans un trajet (47) d'écoulement entre la au moins une vanne (21, 21') et une ouverture (46) de sortie pour la sortie (9) et qui, pour la formation de la position fermée et de positions ouvertes à volonté pour la fermeture et pour l'ouverture du trajet (47) d'écoulement, peut être pivoté par un moteur (23) pas à pas.

6. Dispositif (7) d'alimentation en gaz frais suivant la revendication 5, **caractérisé en ce que** la vanne (23) proportionnelle comporte un ressort (41) de sécurité, qui est relié au disque (44) de vanne et qui applique une force sur celui-ci dans la direction de la position fermée du disque (44) de vanne.

7. Dispositif (7) d'alimentation en gaz frais suivant l'une des revendications précédentes, **caractérisé en ce que** la au moins une vanne (21, 21') est une vanne à membrane.

8. Dispositif (7) d'alimentation en gaz frais suivant l'une des revendications précédentes, en ce que le dispositif (7) d'alimentation en gaz frais comporte au moins un capteur (18) de pression pour détecter la pression (25, 48) de sortie et au moins un capteur (19) de pression pour détecter une pression (27) d'entrée dans l'entrée (6) d'air de suralimentation.

9. Dispositif (7) d'alimentation en gaz frais suivant l'une des revendications 1 à 7, **caractérisé en ce qu'**une pression (25, 48) de sortie et une pression (27) d'entrée dans l'entrée (6) d'air de suralimentation peuvent être détectées au moyen de dispositifs de mesure montés à l'extérieur du dispositif d'alimentation en gaz frais.

10. Dispositif (7) d'alimentation en gaz frais suivant l'une des revendications 1 à 7; **caractérisé en ce qu'**une pression (25, 48) de sortie et une pression (27) d'entrée dans l'entrée (6) d'air de suralimentation peuvent être calculées à l'aide de paramètres de fonctionnement au moyen d'algorithmes appropriés et/ou de valeurs de table mises en mémoire.

11. Procédé de réglage d'une pression (25, 48) de sortie dans une sortie (9) d'un dispositif (7) d'alimentation en gaz frais suivant l'une des revendications précédentes, dans lequel le procédé comprend les stades de procédé suivantes :
(S1) on détermine une pression (27) d'entrée dans une entrée (6) d'air de suralimentation et une pression (25, 48) de sortie dans la sortie (9) du dispositif d'alimentation en gaz frais, ainsi que les paramètres de fonctionnement d'un état de fonctionnement du moteur (1) à combustion ;
(S2) on interrompt la liaison entre la sortie (9) et l'entrée (6) d'air de suralimentation, en fermant le dispositif de réglage, de préférence l'élément (6) à volet, si un paramètre de fonctionnement déterminé ou plusieurs exigent une plus grande accélération du moteur (1) à combustion ;
(S3) on ouvre la liaison entre la sortie (9) et l'entrée (8) d'air comprimé, en ouvrant la au moins une vanne (21, 21') et la vanne (23) proportionnelle pendant une phase (31) d'établissement de la pression et on règle la pression (25, 48) de sortie, en comparant la pression (25, 48) de sortie à une pression (29) de consigne, en réglant la vanne (23) proportionnelle pendant une phase (32) de réglage de la pression ;
(S4) on ferme la liaison entre la sortie (9) et l'entrée (8) d'air comprimé, en fermant la au moins une vanne (21, 21') ainsi que la vanne proportionnelle et on ouvre la liaison entre la sortie (9) et l'entrée (6) d'air de suralimentation, en ouvrant le dispositif de réglage, de préférence l'élément (16) à volet, lorsque la pression (27) d'entrée a atteint une valeur définie et paramétrable.

12. Procédé suivant la revendication 11, **caractérisé en ce que** l'on détermine la pression (29) de consigne à partir des paramètres de fonctionnement déterminés et des pressions par le dispositif de commande au moyen d'algorithmes appropriés et/ou de valeurs de table mises en mémoire.

13. Procédé suivant la revendication 11 ou 12, **caractérisé en ce que** le réglage de la vanne (23) proportionnelle s'effectue suivant une table de consultation par le dispositif (15) de commande.
